# EUROPEAN PATENT APPLICATION

(11) **EP 4 438 266 A1**
(43) Date of publication of application: **02.10.2024**
(21) Application number: 23831915.6
(22) Date of filing: 29.06.2023
(51) Int. Cl.: B29C 51/08, H01M 50/105, B29C 51/42, B29C 51/26, B29C 43/36, B29C 51/40, B29C 51/46

(54) **POUCH FORMING DEVICE AND POUCH FORMING METHOD USING SAME**

(30) Priority: 01.07.2022 KR 20220081405
(71) Applicant: LG Energy Solution, Ltd., Seoul 07335 (KR)
(72) Inventor: KIM, Ik Joon, Daejeon 34122 (KR); LEE, Eung Hyun, Daejeon 34122 (KR)
(74) Representative: Plasseraud IP
(86) International application number: PCT/KR2023/009078
(87) International publication number: WO 2024/005557

(57) **Abstract**

The present invention relates to a pouch forming device and a pouch forming method using the same, and the pouch forming device related to one example of the present invention comprises a cold unit for cold-working a pouch sheet, and a forming unit, to which the pouch sheet passing through the cold unit is supplied, for forming an accommodating part, in which an electrode assembly is accommodated, in the pouch sheet.

## Description

### Technical Field

The present invention relates to a pouch forming device for forming a receiving portion for accommodating a battery assembly in a pouch sheet and a pouch forming method using the same.

This application claims the benefit of priority based on Korean Patent Application No. 10-2022-0081405 dated July 1, 2022, the disclosure of which is incorporated herein by reference in its entirety.

### Background Art

Secondary batteries are classified into coin-type secondary batteries, rectangular secondary batteries, cylindrical secondary batteries, and pouch-type secondary batteries, and the like, depending on the shape of the battery case.

In the secondary battery, an electrode assembly mounted inside the battery case has a laminated structure of electrodes and a separator.

Electrode assemblies may be classified into a jelly roll type, in which sheet-like positive electrode and negative electrode coated with active materials are wound with a separator interposed therebetween, a stacked type, in which a plurality of positive electrodes and negative electrodes are laminated sequentially in a state where a separator is interposed, and a stacked/folded type, in which unit cells with a stacked type are wound in a long length of separation film.

Recently, the pouch-type secondary battery in which a stacked or stacked/folded electrode assembly is embedded into an aluminum (AL) pouch-type battery case tends to be widely used.

The pouch-type secondary battery has advantages of simple structure, high electric capacity per unit volume, low manufacturing cost, small weight, and easy shape change.

The pouch-type secondary battery is formed by performing slurry mixing, electrode (positive electrode material/negative electrode material) coating, electrode plate pressing, electrode plate slitting and electrode plate punching/notching, electrode plate drying, electrode plate lamination, electrode plate stacking, pouch packaging, electrolyte injection, formation, and pouch degassing processes in this order.

Meanwhile, in the packaging process, a pouch forming operation forming an accommodating part for accommodating a battery assembly in a pouch sheet is performed.

The accommodating part is formed by press-fitting a partial region of the pouch sheet.

At this instance, an organic lubricant is generally added to a film such as a pouch sheet, and after film formation, the lubricant oozes out onto the film surface, and good slipperiness is expressed through the lubricant.

Meanwhile, when the pouch sheet comprises an aluminum (Al) layer and deep forming of the pouch sheet is performed, there is a problem that the aluminum layer is fractured and cracks are generated in the pouch sheet.

In addition, upon the forming process of the pouch sheet, a frictional force increases and sliding performance deteriorates, whereby a large pressure load for press-fitting the accommodating part is applied thereto.

### Disclosure

### Technical Problem

It is a problem to be solved by the present invention to provide a pouch forming device capable of increasing a lubricant amount of a pouch sheet by lowering the temperature of the pouch sheet in advance upon forming process of the pouch sheet, and reducing frictions upon performing deep forming, and a pouch forming method using the same.

### Technical Solution

In order to solve the above problem, according to one aspect of the present invention, a pouch forming device is provided, which comprises a cold unit for cold-working a pouch sheet, and a forming unit, tp which the pouch sheet passing through the cold unit is supplied, for forming an accommodating part, in which an electrode assembly is accommodated, in the pouch sheet.

Also, the cold unit may comprise a cold chamber having a space part through which the pouch sheet passes, and a temperature control part for controlling the temperature of the space part of the cold chamber.

In addition, the temperature control part may be provided to supply compressed air into the space part.

Furthermore, the temperature control part may be provided so that the temperature of the space part is maintained to be lower than room temperature.

Also, the temperature control part may maintain the temperature of the space part at 5°C to 10°C.

In addition, the forming unit may comprise a die having a seating surface on which the pouch sheet supplied from the cold unit is seated and a forming groove formed on the seating surface, a punch for press-fitting a partial region of the pouch sheet into the forming groove to form the accommodating part, and a stripper for pressurizing the edge region of the pouch sheet seated on the die.

Furthermore, the die may be provided to be movable so that the seating surface is closer to the punch or away from the punch.

Also, when the die moves in a direction closer to the punch, the punch may be provided to be inserted into the forming groove.

In addition, when the punch is inserted into the forming groove, the seating surface of the die and the stripper may be provided to maintain a state in contact with each other.

Furthermore, the die may comprise one or more discharge passages connected to the forming groove to enable fluid movement. In addition, when the punch is inserted into the forming groove, the discharge passage may be provided to discharge air in the forming groove to the outside of the die.

Also, the pouch forming device may comprise a control part controlling the cold unit and the forming unit.

The control part may be provided to control the forming unit based on the cold temperature of the cold unit.

Also, according to another aspect of the present invention, a pouch forming method using the pouch forming device is provided, wherein the pouch forming method comprises steps of cold-working a pouch sheet in a process of passing through the cold unit, and forming an accommodating part, in which an electrode assembly is accommodated, in the pouch sheet passing through the cold unit.

In addition, upon cold-work of the pouch sheet, it may be provided to maintain the temperature of the cold unit to be lower than room temperature.

Furthermore, upon cold-work of the pouch sheet, it may be provided to maintain the temperature of the cold unit at 5°C to 10°C.

### Advantageous Effects

As discussed above, the pouch forming device related to one example of the present invention, and the pouch forming method using the same have the following effects.

Before the forming process of the pouch sheet, by lowering the temperature of the pouch sheet in advance, it is possible to increase a lubricant amount of the pouch sheet.

Also, there are effects that upon deep forming of the pouch sheet, it is possible to improve the sliding performance of the pouch sheet, and upon press-fitting, frictions are minimized, whereby it is possible to reduce the pressure load required for the forming process.

In addition, it is possible to improve a critical forming depth of the pouch sheet, and accordingly, it is possible to improve an energy density per battery cell.

### Description of Drawings

Figure 1 is a block diagram for explaining processes in which a pouch forming device according to one example of the present invention is used.
Figure 2 is a schematic diagram showing a pouch forming device according to one example of the present invention.
Figures 3 to 6 are schematic diagrams for explaining one operating state of a pouch forming device according to one example of the present invention.
Figure 7 is a schematic diagram showing a pouch sheet on which the forming process has been completed.

### Mode for Invention

Hereinafter, a pouch forming device according to one example of the present invention, and a pouch forming method using the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

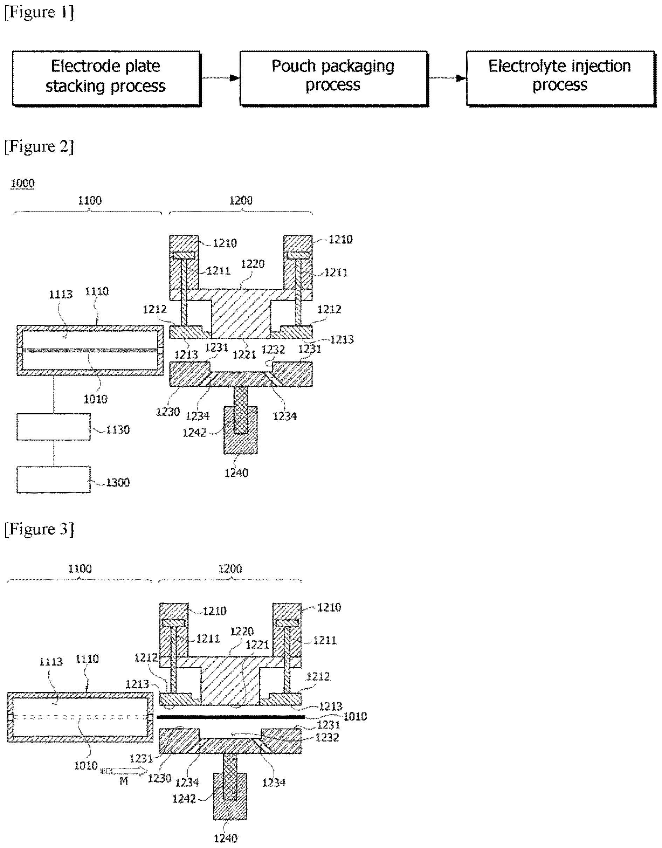

Figure 1 is a block diagram for explaining processes in which a pouch forming device according to one example of the present invention is used.

Referring to Figure 1, the pouch forming method may be performed during a pouch packaging process performed between an electrode plate stacking process and an electrolyte injection process, among processes for manufacturing a pouch-type secondary battery.

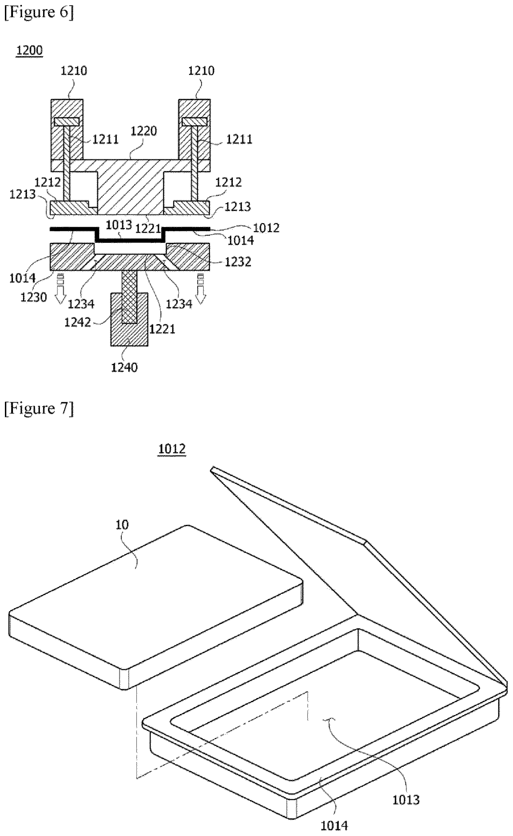

The pouch forming process is a process for forming an accommodating part (1013), in which a battery assembly (10, see Figure 7) is accommodated, in a pouch sheet (1012, see Figure 7).

In addition, the pouch forming device according to one example of the present invention is a device for performing a pouch forming process.

Figure 2 is a schematic diagram showing a pouch forming device according to one example of the present invention, and Figures 3 to 6 are schematic diagrams for explaining one operating state of a pouch forming device according to one example of the present invention.

In addition, Figure 7 is a schematic diagram showing a pouch sheet on which the forming process has been completed.

The pouch forming device (1000) according to one example of the present invention comprises a cold unit (1100) for cold-working a pouch sheet (1010), and a forming unit (1200), in which the pouch sheet (1010) passing through the cold unit (1100) is supplied, for forming an accommodating part (1013), in which an electrode assembly (10) is accommodated, in the pouch sheet (1010).

In this document, the pouch sheet which passes through the cold unit (1100) to be supplied to the forming unit (1200) is referred to as the symbol 1010, and the pouch sheet on which the accommodating part (1013) is formed after the forming process in the forming unit (1200) is referred to as the symbol 1012.

The forming unit (1200) is a device forming the accommodating part (1013) in the pouch sheet (1010), and the cold unit (1100) is a device cooling the temperature of the pouch sheet (1010) supplied (M) to the forming unit (1200).

Here, the pouch sheet (1010) supplied to the cold unit (1100) and the forming unit (1200) may comprise aluminum (Al) and may be provided in the form of a sheet.

The cold unit (1100) is a device for controlling the temperature of the pouch sheet (1010) before supplying the pouch sheet (1010) to the forming unit (1200). In particular, the cold unit (1100) is provided to lower the temperature of the pouch sheet (1010) by cold-working the pouch sheet (1010) to a predetermined temperature.

The cold unit (1100) may comprise a cold chamber (1110) having a space part (1113) through which the pouch sheet (1010) passes, and a temperature control part (1130) for controlling the temperature of the space part (1113) of the cold chamber (1110).

The cold unit (1100) may be configured in various ways to cold-work the pouch sheet (1010).

As one example, the cold unit (1100) may control the temperature of the pouch sheet (1010) passing through the cold chamber (1110) using compressed air. That is, the temperature control part (1130) may be provided to supply compressed air into the space part (1113). The compressed air may be adjusted to a predetermined temperature to be supplied into the cold chamber (1110).

As another example, the temperature control part (1130) may comprise a cooling device (compressor, evaporator, condenser, expansion valve, etc.) by means of a refrigerant to control the temperature of the space part (1113), and may also control the temperature of the pouch sheet (1010) passing through the cold chamber (1110) through the cooling device.

In this case, as the temperature of the space part (1113) of the cold chamber (1110) is lowered by the refrigerant, it is possible to lower the temperature of the pouch sheet (1010) passing through the cold chamber (1110).

The temperature control part (1130) may be provided so that the temperature of the space part (1113) is maintained to be lower than room temperature. In particular, the temperature control part (1130) may be provided to maintain the temperature of the space part (1113) at 5°C to 10°C. In addition, the temperature control part (1130) may be controlled by a control part (1300) to be described below.

Typically, the pouch sheet (1010) is transported at room temperature before the forming process, where the pouch sheet (1010) is passed through the cold chamber (1110), whereby it is possible to cool the pouch sheet (1010) in advance at a temperature lower than room temperature.

The control part (1300) may control the temperature of the space part (1113) through the temperature control part (1130). In addition, the pouch forming device (1000) may transfer the pouch sheet (1010) to the cold unit (1100) and the forming unit (1200) through a transfer part such as roll to roll.

In this way, when the temperature of the pouch sheet (1010) is lowered using the cold unit (1100), the lubricant amount of the pouch sheet (1010) increases before the forming process and the sliding performance of the pouch sheet (1010) is improved.

The forming unit (1200) is provided to form an accommodating part (1013) such that the electrode assembly (10) is accommodated inside the pouch sheet (1010) during the secondary battery packaging process.

Referring to Figure 3, the pouch sheet (1010) supplied (M) to the forming unit (1200) is in a state where the temperature is lowered by the cold unit (1100).

Referring to Figures 2 to 6, the forming unit (1200) may comprise a die (1230) having a seating surface (1231) on which the pouch sheet (1010) supplied (M) from the cold unit (1100) is seated and a forming groove (1232) formed on the seating surface (1231), a punch (1220) for press-fitting a partial region of the pouch sheet into the forming groove (1232) to form the accommodating part, and a stripper (1212) for pressurizing the edge region of the pouch sheet (1010) seated on the die (1230).

Referring to Figure 3, the pouch sheet (1010) cold-worked by the cold unit (1100) is supplied between the die (1230), and the punch (1220) and the stripper (1212) of the forming unit (1200).

The die (1230) is located at the bottom of the pouch sheet (1010), and the punch (1220) and the stripper (1212) are located at the top of the pouch sheet (1010).

At this time, the die (1230) may support the pouch sheet (1010) at the bottom of the pouch sheet (1010). The die (1230) has a seating surface (1231) on which the pouch sheet (1010) is seated. The seating surface (1231) may be provided at the upper end of the die (1230).

A forming groove (1232) is formed on the seating surface (1231) of the die (1230). The forming groove (1232) is formed as a partial region of the seating surface (1231) is depressed inward (bottom).

In addition, the size and shape of the accommodating part (1213) formed in the pouch sheet (1012) vary depending on the size and shape of the forming groove (1232) formed in the die (1230).

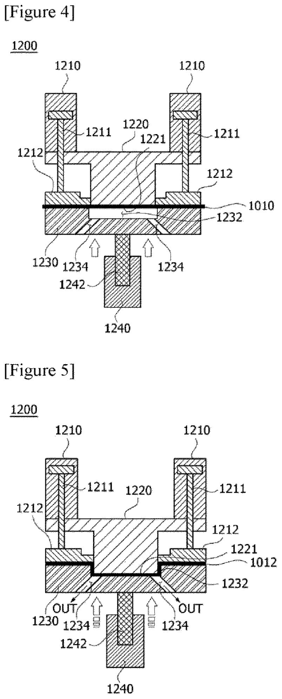

Referring to Figure 4, for the forming process of the pouch sheet (1010), the die (1230) is provided to ascend toward the pouch sheet (1010). In addition, referring to Figure 6, the die (1230) is provided to descend to its initial position when the forming process of the pouch sheet (1012) is completed.

Referring to Figures 4 to 6, the die (1230) is provided to be movable so that the seating surface (1231) is closer to the punch (1220) or away from the punch (1220). To this end, a die moving part (1240) is connected to the die (1230).

At this time, when the die (1230) moves in a direction closer to the punch (1220), the punch (1220) is provided to be inserted into the forming groove (1232), and when the punch (1220) is inserted into the forming groove (1232), the seating surface (1231) of the die (1230) and the stripper (1212) are provided to maintain a state in contact with each other.

The die moving part (1240) is connected to the lower end of the die (1230) to provide power which ascends the die (1230) toward the pouch sheet (1012) or descends it away from the pouch sheet (1012).

In addition, the die moving part (1240) may be provided with a servo motor, but is not necessarily limited thereto. When the die moving part (1240) is provided with a servo motor, there is an advantage that the ascending and descending height of the die (1230) with respect to the pouch sheet (1012) may be adjusted in detail.

At this time, the die moving part (1240) may also be connected to the die (1230) via an axis-shaped moving connection part (1242).

Meanwhile, the die (1230) may comprise one or more discharge passages (1234) connected to the forming groove (1223) to enable fluid movement, and when the punch (1220) is inserted into the die (1230), the discharge passage (1234) may be provided to discharge air in the forming groove (1232) to the outside of the die (1230).

Referring to Figure 5, at least one discharge passage (1234) may be formed in the die (1230), and the discharge passage (1234) communicates with the forming groove (1232) formed in the die (1230). The discharge passage (1234) may be formed such that its upper end communicates with the forming groove (1232) formed in the die (1230) and its lower end penetrates the lower end of the die (1230) to be communicated with the outside.

During the forming process, when the pouch sheet (1012) is pressurized by the die (1230), the punch (1220), and the stripper (1212), the air existing between the forming groove (1232) and the pouch sheet (1012) is discharged to the outside of the die (1230) through the discharge passage (1234).

At least one discharge passage (1234) may be provided on any one side based on the die moving part (1240), but the discharge passage may also be provided on both sides based on the die moving part (1240), respectively.

When the discharge passage (1234) is provided on both sides of the die moving part (1240), respectively, two discharge passages (1234) may be provided at a predetermined distance from each other.

In addition, the punch (1220) is provided to press-fit the pouch sheet (1010) seated on the seating surface (1231) of the die (1230).

Referring to Figures 4 and 5, the punch (1220) press-fits the pouch sheet (1012) together with the die (1230) in the direction of the forming groove (1232) by the ascending motion of the die (1230), thereby forming the accommodating part (1013) in the pouch sheet (1012).

The punch (1220) is disposed at a position where a pressing part (1221) faces the forming groove (1232) of the die (1230). At this instance, when the pressing part (1221) of the punch (1220) is inserted into the forming groove (1232), a partial region of the pouch sheet is press-fitted, whereby the accommodating part (1013) is formed in the pouch sheet (1012).

At this time, the pressing part (1221) of the punch (1220) may be provided to have a width direction length smaller than the width direction length of the forming groove (1232).

In addition, the stripper (1212) is disposed to pressurize the edge region of the pouch sheet together with the die (1230), and the stripper (1212) is provided to form an outer part (1014) around the accommodating part (1013) of the pouch sheet (1012) as it contacts the seating surface of the die (1230).

At this time, the position where the outer part (1014) is formed means the edge region surrounding the accommodating part (1013) formed on the pouch sheet (1012).

The stripper (1212) forms an outer part (1014) by pressurizing the edge region of the pouch sheet (1012) located between the die (1230) and the punch (1220) with the pressing end (1213).

At this time, the outer part (1014) formed by the stripper (1212) is supported by the seating surface (1231) of the die (1230).

Meanwhile, the punch (1220) pressurizes the pouch sheet (1012) seated on the die (1230) in a state where its position is fixed on a moving support part (1210).

In addition, the moving support part (1210) may be provided in the form of a block. At this time, a connection part (1211) of the stripper (1212) is inserted into the moving support part (1210), and the stripper (1212) is provided to be movable (ascended/descended) within the moving support part (1210), and the punch (1220) is fixed to the moving support part (1210).

Referring to Figure 4, when the punch (1220) and the stripper (1212) do not descend toward the pouch sheet (1010), and the pouch sheet (1010) seated on the seating surface (1231) of the die (1230) ascends by the ascending motion of the die (1230), the punch (1220) and the stripper (1212) come into contact with the pouch sheet (1010) seated on the seating surface (1231) of the die (1230), and pressurize the pouch sheet (1010).

Referring to Figure 5, in a state where the pouch sheet (1012) is seated on the seating surface (1231) of the die (1230), the die (120) is ascended again in a direction closer to the punch (1220) and the stripper (1212) by the die moving part (1240).

Then, the pouch sheet (1012) seated on the seating surface (1231) of the die (1230) contacts the seating surface (1231) of the die (1230), the pressing end (1213) of the stripper (1212), and the pressing part of the punch (1220), respectively, and as the die (1230) ascends, it is pressurized by the punch (1220) and the stripper (1212) to form the accommodating part (1013) and the outer part (1014) of the pouch sheet (1012), respectively.

That is, as the pressing part (1221) of the punch (1220) is inserted into the forming groove (1232), the accommodating part (1013) is formed in the pouch sheet (1012), and while the pressing end (1213) of the stripper (1212) and the seating surface (1231) of the die (1230) pressurize the edge region of the pouch sheet (1012), the outer part (1014) is formed.

Meanwhile, the pouch forming device (1000) according to one example of the present invention may comprise a control part (1300). The control part (1300) may be provided to control the cold unit (1100) and the forming unit (1200).

Also, the control part (1300) may also adjust the transfer speed of the transfer part. Through this, the control part (1300) may control the speed at which the pouch sheet passes through the cold chamber (1110), and through this, it may adjust the cooling degree of the pouch sheet.

In addition, the control part (1300) may also control the temperature control part (1130) to adjust the temperature of the space part (1113). That is, it may adjust the cold temperature (temperature of the space part) of the cold unit (1100).

Furthermore, the control part (1300) may control the ascending and descending motions of the die (1230) by controlling the die moving part (1240).

Also, the control part (1300) may also adjust the pressure applied to the pouch sheet (1012) from the punch (1220) and the stripper (1212) after the pouch sheet (1012) is in contact with the punch (1220) and the stripper (1212) as the die (1230) is ascended. That is, the control part (1300) may be provided to adjust the depth (forming depth) of the accommodating part and the forming pressure.

In addition, the control part (1300) may be provided to control the forming unit (1200) based on the cold temperature (temperature of the space part) of the cold unit (1100).

For example, if the pouch sheet is sufficiently cold-worked in the process of passing through the cold chamber, the control part (1300) may also increase the forming depth by controlling the forming unit (1200), and if the pouch sheet is not sufficiently cold-worked in the process of passing through the cold chamber, the control part (1300) may also reduce the forming depth by controlling the forming unit (1200).

Referring to Figure 6, when the forming operation of the pouch sheet (1012) is completed, the die (1230) is descended by the die moving part (1240) in the direction away from the punch (1220) and the stripper (1212), that is, to the initial position.

Referring to Figure 7, after the forming process, the accommodating part (1013) is formed in the central region of the pouch sheet (1012), and the outer part (1014) is formed in the edge region surrounding the accommodating part (1013).

Hereinafter, with reference to Figures 2 to 7, a pouch forming method using the above-described pouch forming device (1000) will be described.

The pouch forming method according to one example of the present invention is a pouch forming method using the pouch forming device (1000), which comprises steps of cold-working a pouch sheet in a process of passing through the cold unit, and forming an accommodating part, in which an electrode assembly is accommodated, in the pouch sheet passing through the cold unit.

As described above, upon cold-work of the pouch sheet, it may be provided so that the temperature of the cold unit is maintained to be lower than room temperature. In addition, upon cold-work of the pouch sheet, it may be provided to maintain the temperature of the cold unit at 5°C to 10°C.

Specifically, the pouch forming method according to one example of the present invention may comprise a cold-working step, a seating step, and an accommodating part forming step.

The cold-working step is a step for cold-working the pouch sheet (1010) using the cold unit (1100).

Also, the seating step is a step of seating the pouch sheet (1010) cold-worked by the cold unit (1100) on the seating surface (1231) of the die (1230).

The pouch sheet (1010) is supplied (M) to the forming unit (1200) after its temperature is lowered while passing through the cold unit (1100).

In addition, the pouch sheet (1010) is supplied (M) to the space between the stripper (1212) and the punch (1220) of the forming unit (1200) and the die (1230).

Referring to Figures 3 and 4, the die (1230) is ascended toward the pouch sheet (1010) by the die moving part (1240), whereby the pouch sheet (1010) is seated on the seating surface (1231).

Referring to Figure 5, the accommodating part forming step is a step for forming the accommodating part (1013), in which a battery assembly is accommodated, in the pouch sheet (1012).

In a state where the pouch sheet (1012) is seated on the seating surface (1231) of the die (1230), the die (1230) is ascended toward the punch (1220) and the stripper (1212) by the die moving part (1240).

As the die (1230) is ascended to the preset final position, the pouch sheet (1012) seated on the seating surface (1231) of the die (1230) is pressurized between the punch (1220) and the stripper (1212).

At this time, as the die (1230) ascends, the pressing part (1221) of the punch (1220) is inserted into the forming groove (1232) formed in the die (1230), and the accommodating part (1013) is formed in a partial region of the pouch sheet (1012) located on the forming groove (1232) of the die (1230).

The pouch forming method may comprise a step of forming an outer part of the pouch sheet.

The outer part forming step is a step of forming the outer part (1014) in the edge region of the pouch sheet (1012) by the stripper (1212).

In the accommodating part forming step, when the die (1230) is ascended to a position where it engages with the punch (1220) and the stripper (1212), the edge region is pressurized by the stripper (1212), except for the central region press-fitted by the punch (1220), whereby the outer part (1014) is formed in the pouch sheet (1012).

Here, the outer part forming step and the accommodating part forming step are performed simultaneously.

In addition, when the accommodating part (1013) and the outer part (1014) are formed in the pouch sheet (1012), the air existing between the forming groove (1232) and the pouch sheet (1012) is discharged to the outside of the die (1230) through the discharge passage (1234).

Referring to Figure 6, when the operation of forming the accommodating part (1013) and the outer part (1014) in the pouch sheet (1012) is completed, the die (1230) is descended by the die moving part (1240) to return to its original position.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the pouch forming device related to one example of the present invention, and the pouch forming method using the same, it is possible to increase a lubricant amount of the pouch sheet, by lowering the temperature of the pouch sheet in advance before the forming process of the pouch sheet.

## Claims

1. A pouch forming device comprising:
a cold unit for cold-working a pouch sheet; and
a forming unit, to which the pouch sheet passing through the cold unit is supplied, for forming an accommodating part, in which an electrode assembly is accommodated, in the pouch sheet.

2. The pouch forming device according to claim 1, wherein the cold unit comprises
a cold chamber having a space part through which the pouch sheet passes, and
a temperature control part for controlling the temperature of the space part of the cold chamber.

3. The pouch forming device according to claim 2, wherein
the temperature control part is provided to supply compressed air into the space part.

4. The pouch forming device according to claim 2, wherein
the temperature control part is provided so that the temperature of the space part is maintained to be lower than room temperature.

5. The pouch forming device according to claim 4, wherein
the temperature control part maintains the temperature of the space part at 5°C to 10°C.

6. The pouch forming device according to claim 1, wherein
the forming unit comprises: a die having a seating surface on which the pouch sheet supplied from the cold unit is seated and a forming groove formed on the seating surface;
a punch for press-fitting a partial region of the pouch sheet into the forming groove to form the accommodating part; and
a stripper for pressurizing the edge region of the pouch sheet seated on the die.

7. The pouch forming device according to claim 6, wherein
the die is provided to be movable so that the seating surface is closer to the punch or away from the punch.

8. The pouch forming device according to claim 7, wherein
when the die moves in a direction closer to the punch, the punch is inserted into the forming groove.

9. The pouch forming device according to claim 8, wherein
when the punch is inserted into the forming groove, the seating surface of the die and the stripper maintain a state in contact with each other.

10. The pouch forming device according to claim 6, wherein
the die comprises one or more discharge passages connected to the forming groove to enable fluid movement.

11. The pouch forming device according to claim 10, wherein
when the punch is inserted into the forming groove, the discharge passage is provided to discharge air in the forming groove to the outside of the die.

12. The pouch forming device according to claim 1, further comprising
a control part controlling the cold unit and the forming unit, wherein
the control part controls the forming unit based on the cold temperature of the cold unit.

13. A pouch forming method using the pouch forming device according to any one of claims 1 to 12, comprising steps of:
cold-working a pouch sheet in a process of passing through the cold unit; and
forming an accommodating part, in which an electrode assembly is accommodated, in the pouch sheet passing through the cold unit.

14. The pouch forming method according to claim 13, wherein
the temperature of the cold unit is maintained to be lower than room temperature.

15. The pouch forming method according to claim 14, wherein
the temperature of the cold unit is maintained at 5°C to 10°C.
